Europäisches Patentamt

European Patent Office

Office européen des brevets

(11) Publication number: **0 000 661**
**A1**

# EUROPEAN PATENT APPLICATION

(21) Application number: **78300197.7**

(22) Date of filing: **25.07.78**

(51) Int. Cl.$^2$: **C 01 B 31/36**

(30) Priority: **27.07.77 GB 31583/77**

(43) Date of publication of application:
**07.02.79 Bulletin 79/3**

(84) Designated contracting states:
**BE CH DE FR GB NL SE**

(71) Applicant: **NATIONAL RESEARCH DEVELOPMENT CORPORATION**
**P.O. Box 236**
**Kingsgate House 66-74 Victoria Street**
**London SW1E 6SL. (GB)**

(72) Inventor: **Grieveson, Paul**
**56, Villiers Avenue SURBITON,**
**SURREY KT5 8BD. (GB)**

(72) Inventor: **Pomfret, Roger John**
**961 Sauchiehall Street Glasgow**
**Scotland. (GB)**

(72) Inventor: **Taylor, John**
**23 Horsburgh Avenue Kilsyth Glasgow**
**Scotland. (GB)**

(74) Representative: **Neville, Peter**
**Warwick Patent Department National Research**
**Development Corporation**
**P.O. Box 2**
**London SW1E 6SL. (GB)**

(54) **Making silicon carbide and silicon carbide so made.**

(57) β-Silicon carbide and a process for making it by heating together silica and a carbonaceous material at 1350°C to 1550°C.

By 1350°C the partial pressure of carbon monoxide must not exceed 0,11 atmospheres and by 1550°C it must be lower than 1,15 atmospheres. The carbonaceous material must be of high reactivity such as coal, rice husks, coconut charcoal and not pure graphite.

EP 0 000 661 A1

115189

## MAKING SILICON CARBIDE AND SILICON CARBIDE SO MADE

This invention is about making silicon carbide.

Conventionally, silicon carbide is made by heating a powdered mixture of high-grade silica sand and high-grade carbon such as anthracite or petroleum coke. Temperatures of 2000 - 2500°C have to be sustained for a day or more, and the yield is far short of 100%. We tentatively believe that gaseous silicon species, on contacting a carbon particle, form silicon carbide which thus soon envelopes the particle. Further conversion of that particle must then depend on solid-state diffusion through its silicon-carbide envelope, hence the slow reaction and high temperatures required.

The invention is making silicon carbide by heating a mixture of silica with a carbonaceous material at from 1350°C to 1550°C under a partial pressure of carbon monoxide, measured in atmospheres, not exceeding ten raised to the power $(8.6 - 15600/T)$ where T is the temperature in degrees Kelvin, the carbonaceous material being such that a specimen thereof loses (by oxidation) at least $40mg/cm^2/sec$ of carbon in excess carbon dioxide at 1 atmosphere pressure at 1450°C.

The silicon carbide so made is in the form of fine particles of β-phase, which has a cubic crystal structure.

At too low temperatures, silicon carbide will form rather slowly or with poor yield. At high temperatures, silicon carbide will form with reasonable yield and speed at around

- 2 -

atmospheric pressure, but expensive types of furnace are required. As the rate of formation has been observed to increase as the square of the reciprocal ambient pressure, it is often more effective to invest in low-pressure equipment than in higher-temperature furnaces. Therefore, a preferred temperature range, having regard to such factors as today's technical capabilities, relative costs and interest rates, is from $1400^{\circ}C$ to $1500^{\circ}C$, and a most preferred range is from $1420^{\circ}C$ to $1480^{\circ}C$, with an optimum at around $1450^{\circ}C$, where complete reaction may typically take some 40 minutes (compared with 10 minutes at $1500^{\circ}C$, and a few hours for an incomplete reaction at $1350^{\circ}C$).

The maximum partial pressure of carbon monoxide which can be used according to the invention is as follows:

| | | |
|---|---|---|
| $1550^{\circ}C$ | - | 1.15 atmospheres |
| $1530^{\circ}C$ | - | 1.00 atmospheres |
| $1500^{\circ}C$ | - | 0.68 atmospheres |
| $1450^{\circ}C$ | - | 0.39 atmospheres |
| $1400^{\circ}C$ | - | 0.19 atmospheres |
| $1350^{\circ}C$ | - | 0.11 atmospheres |

Above these pressures, silicon carbide does not form. Lower pressures are strongly preferred, because of their effect on the rate of formation, with the optimum pressure (just as the temperature) being a compromise between the various technical factors and costs.

0000661

The carbonaceous material may for example be coal (including for example lignite), rice husks (which have a negative cost at present, inasmuch as contractors are paid to dump them), and coconut charcoal. The carbonaceous material must not be any of the following (for example): petroleum coke without additions, high-grade anthracite, and spectroscopically pure graphite without additions; the reactivity of these is too low. Electrode graphite is a borderline material, which it is on the whole preferred to eschew.

The carbonaceous material must have a reactivity of at least $40mg/cm^2/sec$ on the basis explained above, and the reactivities of coconut charcoal and spectroscopically pure graphite are 70 and $3mg/cm^2/sec$ respectively on the same basis.

In making silicon carbide according to the invention, it is tentatively believed that the carbon particles under the specified conditions are oxidised by carbon dioxide to produce an atmosphere of carbon monoxide around each particle; this atmosphere reacts with any gaseous silicon species before the latter can reach the particle, and in this way the particle does not become enveloped with silicon carbide which could impede further reaction.

The silicon carbide made according to the invention may be exploited, for instance, as a raw material in the refractories and abrasives industries.

The invention will now be described by way of example.

- 4 -

Sand (20g) mined from high-grade silica deposits at Lochaline (in Morvern, Scotland) was hand-mixed with 5g of Yorkshire Nuts, a low-grade lignite, from which slack smaller than 75 mesh B.S. had been removed. The mixture was placed in a 2 cm-diameter graphite crucible with a tight-fitting lid, which is equipped with a 0.5mm hole through which the air pressure in the crucible can be measured and varied as desired.

Pressure in the crucible was reduced to 60 torr (0.0079 atmospheres) and the crucible heated to $1450^{o}C$. Evolved gases were pumped away as necessary to keep the pressure at 60 torr, which in a short time was for practical purposes equal to the partial pressure of carbon monoxide, the preponderantly formed gas.

Heating was discontinued after 1 hour. The crucible charge then contained cubic β-silicon carbide of good purity in fine powder form, and contained no silica (cristobalite) according to X-ray diffraction investigations; in other words, all the silicon had been converted.

A further identical sample of 10g Yorkshire Nuts, whose total surface area was determined, was placed in a fluidised bed furnace. (A static bed furnace could have been used as long as the sample was loosely packed and subject to high gas flow-rates ensuring ample gas access to all parts of the sample.) The furnace was evacuated and then heated to $1450^{o}C$ and its bed was fluidised with excess pure carbon dioxide at 1 atmosphere.

The Yorkshire Nuts began to oxidise according to the reaction $C + CO_2 \rightarrow 2CO$, and after a set time the heating and gas were stopped. The weight loss of the Yorkshire Nuts was found to be $80mg/cm^2/sec$.

- 6 -

## CLAIMS

1. Making silicon carbide by heating a mixture of silica with a carbonaceous material at from 1350$^{o}$C to 1550$^{o}$C under a partial pressure of carbon monoxide, measured in atmospheres, not exceeding ten raised to the power (8.6 - 15600/T) where T is the temperature in degrees Kelvin, the carbonaceous material being such that a specimen thereof loses (by oxidation) at least 40mg/cm$^{2}$/sec of carbon in excess carbon dioxide at 1 atmosphere pressure at 1450$^{o}$C.

2. Making silicon carbide according to claim 1, at from 1400$^{o}$C to 1500$^{o}$C.

3. Making silicon carbide according to claim 2, at from 1420$^{o}$C to 1480$^{o}$C.

4. Making silicon carbide according to any preceding claim, wherein the carbonaceous material is coal, rice husks or coconut charcoal.

5. Silicon carbide made according to any preceding claim.

## DOCUMENTS CONSIDERED TO BE RELEVANT

| Category | Citation of document with indication, where appropriate, of relevant passages | Relevant to claim |
|---|---|---|
| X | AT - B - 260 170 (E.I. DUPONT)<br>* claims 1,2 *<br>& FR - A - 1 460 778<br><br>-- | 1,2,3,5 |
| -- | DE - A - 1 557 593 (IONICS INC.)<br>* claims 5-7 *<br><br>-- | 1,2,3 |
| -- | GB - A - 1 105 882 (CORNING GLASS)<br>* claim 1 *<br><br>-- | 1,2,3 |
| A | SU - A - 138 238 (W.A. KRAWTSCHENKO)<br><br>-- | 4 |
| -- | US - A - 3 754 076 (CUTLER)<br>* claims 1,2, 5-7 *<br><br>-- | |
| -- | DE - A- 2 052 507 (SÜD-CHEMIE)<br>* claims 2, 3 *<br><br>---- | 4 |

**CLASSIFICATION OF THE APPLICATION (Int. Cl.³)**

C 01 B 31/36

**TECHNICAL FIELDS SEARCHED (Int.Cl.³)**

C 01 B 31/36

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| | | |